# EUROPÄISCHE PATENTSCHRIFT

(11) **EP 1 960 810 B1**
(45) Veröffentlichungstag und Bekanntmachung des Hinweises auf die Patenterteilung: **21.05.2014**
(21) Anmeldenummer: 06818919.0
(22) Anmeldetag: 30.11.2006
(51) Int. Cl.: G01S 7/497, G01S 17/87, G01V 8/20

(54) **SENSORANORDNUNG SOWIE SENSORVORRICHTUNG FÜR EINE SENSOR ANORDNUNG**
SENSOR ARRAY AND SENSOR DEVICE FOR A SENSOR ARRAY
SYSTEME DE DETECTION ET DISPOSITIF DE DETECTION DESTINE A UN SYSTEME DE DETECTION

(30) Priorität: 05.12.2005 DE 102005058094; 23.10.2006 DE 102006050303
(43) Veröffentlichungstag der Anmeldung: 27.08.2008
(73) Patentinhaber: Cedes AG, 7302 Landquart (CH)
(72) Erfinder: DE COI, Beat, CH-7320 Sargans (CH)
(74) Vertreter: Dobler, Markus
(86) Internationale Anmeldenummer: PCT/EP2006/011478
(87) Internationale Veröffentlichungsnummer: WO 2007/065591

(56) Entgegenhaltungen:
- EP-A1- 1 306 693
- DE-A1- 10 022 215
- DE-A1- 10 234 291
- DE-A1- 19 644 565
- US-A- 3 652 161
- US-A- 4 812 035
- US-A- 4 888 490
- US-A- 4 894 952
- US-A- 5 017 921
- US-A- 5 122 796
- US-A- 5 243 181
- US-A- 5 250 810
- US-A1- 2003 127 586
- US-A1- 2004 135 992

## Beschreibung

Die Erfindung betrifft eine Tür-/Torüberwachungsvorrichtung nach dem Oberbegriff des Anspruchs 1.

### Stand der Technik

TOF-Sensoren (Time of Flight Sensoren) emittieren Licht und ermitteln aus dem reflektierten Licht die Distanz, die das Licht von einer Reflektionsoberfläche zurück zum Sensor durchlaufen hat. Dies lässt sich, z.B. durch Messung der Zeit, die ein Lichtpuls von einer Quelle über eine Reflektionsfläche zurück zum Sensor benötigt, bewerkstelligen. Eine andere Möglichkeit besteht darin, auf das Licht eine Schwingung aufzumodulieren und die Phase der Schwingung von zurückreflektiertem Licht mit der Phase von ausgesandtem Licht zu vergleichen. Aus der Phasendifferenz kann unter Kenntnis der Modulationsfrequenz die Länge des Lichtweges bestimmt werden.

Mittels derartiger Sensoren können beispielsweise Türanlagen, z.B. eines Aufzugs überwacht werden, um zu verhindern, dass Gegenstände oder Personen in der Tür eingeklemmt werden.

Die DE 102 342 91 A1 offenbart einen Radarsensor für die Steuerung von ortsfesten Vorrichtungen als Reaktion auf das Verhalten eines oder mehrerer Objekte. Die DE 196 44 565 A1 offenbart eine sich bewegende Objekte feststellende Überwachungseinrichtung, insbesondere für Kraftfahrzeuge. Darin wird bei Detektion einer sprunghaften Änderung des Intensitätspegels einer von einem Objekt reflektierten Strahlung auf das Vorhandensein eines Objekts in einem zu überwachenden Raumsektor geschlossen und abhängig vom betreffenden Anwendungsfall ein entsprechendes Signal ausgegeben.

### Aufgabe und Vorteile der Erfindung

Der Erfindung liegt die Aufgabe zugrunde, den Einsatzbereich von Tür-/Torüberwachungseinrichtungen der einleitend bezeichneten Art zu erweitern, insbesondere störunanfälliger betreiben zu können.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einer Tür-/Torüberwachungsvorrichtung mit mehreren Sensorvorrichtungen aus, wobei die Sensorvorrichtungen jeweils eine Quelle für z.B. elektromagnetische Strahlung, insbesondere Licht, jeweils einen Empfänger für die elektromagnetische Strahlung und jeweils eine Steuereinrichtung umfassen, wobei die Steuereinrichtung dazu ausgelegt ist, mittels der Quelle elektromagnetische Strahlung auszusenden und die von der Quelle ausgesandte, von einer Reflexionsfläche eines Objekts reflektierte elektromagnetische Strahlung auszuwerten. Der Kern der Erfindung liegt darin, dass die Steuervorrichtung weiter so ausgebildet ist, mittels der von der Quelle ausgesandten elektromagnetischen Strahlung eine Distanz zu ermitteln, die die elektromagnetische Strahlung von der Reflexionsfläche des Objekts an den Empfänger zurücklegt, wobei Sensorvorrichtungen der mehreren Sensorvorrichtungen mit unterschiedlichen Frequenzen arbeiten, wobei die Steuereinrichtung dazu ausgelegt ist, bei Vorhandensein einer anderen Sensorvorrichtung nach einem Betriebsmodus zu suchen, in welchem Messüberlagerungen verhindert werden können. Detektiert beispielsweise eine Sensorvorrichtung eine weitere Sensorvorrichtung, die auf gleicher Frequenz, z.B. Modulationsfrequenz arbeitet, kann durch diese Vorgehensweise von der Steuervorrichtung eine andere Modulationsfrequenz gesucht werden, bei welcher Überlagerungen durch die detektierte Sensorvorrichtung vermeidbar sind.

Durch diese Vorgehensweise lässt sich eine Sensoranordnung mit wenigstens einer weiteren, gegebenenfalls mehreren weiteren Sensorvorrichtungen unter Vermeidung von Messfehlern aus gegenseitiger Beeinflussung betreiben.

Dieser Vorgehensweise liegt die Erkenntnis zugrunde, dass eine Sensorvorrichtung der einleitend bezeichneten Art nur sicher funktioniert, wenn genau die elektromagnetische Strahlung als rückreflektierte Strahlung ausgewertet wird, die von der Sensorvorrichtung auch emittiert wurde. Dieses Prinzip kann gestört werden, wenn ein weiterer Sensor ebenfalls Licht emittiert, das bei der Auswertung des betrachteten Sensors fehl interpretiert wird. Dadurch kann es schwierig oder sogar unmöglich werden, eine korrekte Distanz vom Sensor zu einer Reflektionsoberfläche zu ermitteln. Es kann beispielsweise der Fall auftreten, dass vom betrachteten Sensor die elektromagnetische Strahlung ausgewertet wird, die von einem benachbarten Sensor ausgesandt und über eine Reflexionsfläche zum betrachteten Sensor gelangt. Die hieraus bestimmte Distanz zum Objekt ist normalerweise nicht die richtige Distanz. Erfindungsgemäß wird dies vermieden durch die Verwendung von unterschiedlichen Frequenzen. Grundsätzlich ist es auch möglich, die Sensorvorrichtungen in einem Zeitmultiplex zu betreiben.

Die unterschiedliche Frequenz kann sich entweder auf die Modulationsfrequenz der elektromagnetischen Strahlung oder aber die Trägerfrequenz selbst beziehen, bzw. sowohl die Modulationsfrequenz als auch die Trägerfrequenz betreffen. Durch beide Maßnahmen lässt sich eine gegenseitige Beeinflussung von Sensorvorrichtungen vermeiden.

Dabei ist es nicht erforderlich, die Sensorvorrichtungen bei deren Herstellung bereits so zu konfigurieren, dass Interferenzen nicht auftreten. Vielmehr lässt sich am Montageort eine Interferenz feststellen und durch geeignete Maßnahmen beseitigen, z.B. indem bei der Anordnung von mehreren Sensorvorrichtungen diese auf unterschiedliche Frequenzen eingestellt werden.

Eine Frequenzänderung ist bevorzugt für die Modulationsfrequenz durchführbar. Es ist jedoch auch denkbar, dass die Trägerfrequenz durch die Steuereinrichtung geändert werden kann.

Eine Frequenzabstimmung kann erfolgen durch z.B. einen DipSchalter, ein von außen zugeführtes Signal oder automatisch. In einer vorteilhaften Ausgestaltung der Erfindung weist die Steuereinrichtung hierzu wenigstens zwei Lichtquellen auf, die mit verschiedenen Frequenzen arbeiten. Je nach Bedarf kann dann zwischen den Lichtquellen gewechselt werden.

Die Frequenz eines Oszillators in einer Sensorvorrichtung lässt sich prinzipiell über Software einstellen. Bei einer Inbetriebnahme kann jede Sensorvorrichtung Messungen, ohne Licht zu emittieren vornehmen. Sofern ein Signal empfangen wird, wartet diese Vorrichtung nicht, bis sie an der Reihe wäre, sondern ändert ihre Modulationsfrequenz für die Messung. Wenn sie eine Frequenz überprüft, und feststellt, dass diese nicht von einer anderen Vorrichtung verwendet wird, kann sie mit dieser Frequenz eine eigentliche Distanzmessung vornehmen.

Um eine Abgrenzung zu anderen Sensorvorrichtungen im Hinblick auf die Frequenz zuverlässig und effektiv vornehmen zu können, wird im Weiteren vorgeschlagen, dass die Frequenz während einer Distanzmessung variiert wird. Beispielsweise wird während einer vorgegebenen Messzeit, das können z.B. 20 ms sein, alle z.B. 100 µs die Frequenz geändert. Es ist auch denkbar, eine kontinuierliche Frequenzänderung vorzunehmen. Eine schädliche Überlappung durch eine Frequenz, die von einer anderen Sensorvorrichtung besetzt ist, wird daher nur in einem vergleichsweise kleinen Messintervall stattfinden, was sich auf die Gesamtmessung nicht wesentlich auswirkt. Dies gilt insbesondere auch dann, wenn der oder die anderen Sensorvorrichtungen nach dem gleichen Prinzip arbeiten. Es sei denn, dass die andere Sensorvorrichtung bzw. die anderen Sensorvorrichtungen exakt synchron die Frequenzänderungen vornehmen, was sich jedoch durch Einführen eines Zufallsaspekts ausschließen lässt.

Wenn die Frequenz während eines Zeitabschnitts einer Distanzmessung konstant bleibt, sollte dieser Zeitabschnitt vorzugsweise kleiner als die Dauer der Messung sein, z.B. mehr als 10 mal kürzer, vorzugsweise mehr 100 mal kürzer in einem noch optimierteren Fall mehr als tausendmal kürzer. Der Zeitabschnitt kann auch nur etwa eine Periode des Signals betragen, das auf das Trägersignal aufmoduliert ist.

Die Frequenzänderung kann dabei 1% betragen, vorzugsweise 5%, in einem noch optimierteren Fall mehr als ungefähr 10%.

Je größer die Frequenzunterschiede sind, desto kürzer kann die Messzeit ausfallen, die für ein interferenzfreies Messergebnis notwendig ist.

Um zu vermeiden, dass sich von zwei oder mehr Sensorvorrichtungen die Frequenz synchron ändert, wird vorgeschlagen, dass eine erste Frequenz willkürlich wählbar ist.

Außerdem kann es bevorzugt sein, wenn alternativ oder zusätzlich eine Frequenzänderung willkürlich stattfindet.

In einer besonders bevorzugten Ausgestaltung der Erfindung ist die Steuervorrichtung ausgelegt eine Messung vorzunehmen, ohne Licht auszusenden, zur Prüfung, ob Signale mit bestimmten Frequenzen vorhanden sind und eine erste Frequenz in Abhängigkeit vom Vorhandensein bzw. nicht Vorhandensein der Frequenz gewählt wird, gegebenenfalls in Abhängigkeit vom Detektionszeitpunkt der Frequenz. Vorzugsweise wird bei jeder Messung eine immer gleich vordefinierte Frequenz verwendet anhand derer eine Sensorvorrichtung erkannt werden kann. Anschließend kann die Frequenz während einer Distanzmessung mehr als 10 mal, vorzugsweise mehr als 100 mal, in einer weiteren Optimierung mehr als 100 mal geändert werden.

In einer einfachen Ausführungsform ist es denkbar, dass eine manuelle Einstellbarkeit der Frequenz gegeben ist. Eine einfache Einstellmöglichkeit ist auch eine Änderung der Frequenz automatisch nach vorgegebener Zeit. Eine Einstellung der Frequenz kann manuell über Schalter, z.B. Dipswitches erfolgen. Hierdurch kann auch die Zeit einstellbar sein, nach welcher sich die Frequenz automatisch ändert.

Eine Änderung der Frequenz kann auch davon abhängig gemacht werden, inwieweit bei einer Prüfung Störungen wahrgenommen werden. Eine Variierung der Frequenz kann kleiner ausfallen, wenn weniger Störungen erfasst werden.

Um Überlagerungen zu vermieden, wird im Weiteren vorgeschlagen, dass ein Empfänger an die Frequenz des ausgestrahlten Lichts anpassbar ist. Beispielsweise kann der Empfänger nur in einem engen Frequenzbereich Signale auswerten, während Signale mit anderen Frequenzen unberücksichtigt bleiben.

Abhängig vom Frequenzbereich des auf ein Trägersignal aufmodulierten Signals ist eine Distanzmessung eindeutig oder mehrdeutig. Wenn die Distanz vom Sender über Objekt zurück an den Empfänger größer ist als die Wellenlänge des aufmodulierten Signals, wird die Messung mehrdeutig. Bei einer kürzeren Wellenlänge ist die Messung allerdings genauer. Um eine genaue Messung zu erhalten, kann man zunächst eine erste Messung mit Frequenzen in einem ersten Frequenzbereich und eine zweite Messung mit Frequenzen in einem zweiten Frequenzbereich ausführen, wobei der erste Frequenzbereich so gewählt ist, dass er eine genaue, aber nicht eindeutige Messung liefert, jedoch der zweite Frequenzbereich eindeutige Messungen ermöglicht. Eine Überlagerung der beiden Messungen liefert dann eine eindeutige und genaue Messung. Eine eindeutige Messung lässt sich auch dadurch erzielen, dass zwei nicht eindeutige Messungen in Bezug zueinander gebracht werden.

In einer besonders vorteilhaften Ausgestaltung der Erfindung erfolgen die Messungen in einem Frequenzbereich, der so auf den Abstand zu einem zu messenden Objekt abgestimmt ist, dass bei eindeutiger Messung eine optimierte Messgenauigkeit erzielbar ist.

Die Frequenz kann in einem elektromagnetischen Strahlungsbereich liegen, wie z.B. Radar oder Licht. Allerdings ist es auch möglich, dass Frequenzen im Schallbereich zur Anwendung kommen.

Eine Anordnung von mehreren Sensorvorrichtungen ist vorzugsweise in einem Gehäuse untergebracht.

### Zeichnungen

Mehrere Ausführungsbeispiele der Erfindung sind in den Zeichnungen dargestellt und werden unter Angabe weiterer Vorteile und Einzelheiten nachfolgend näher erläutert.

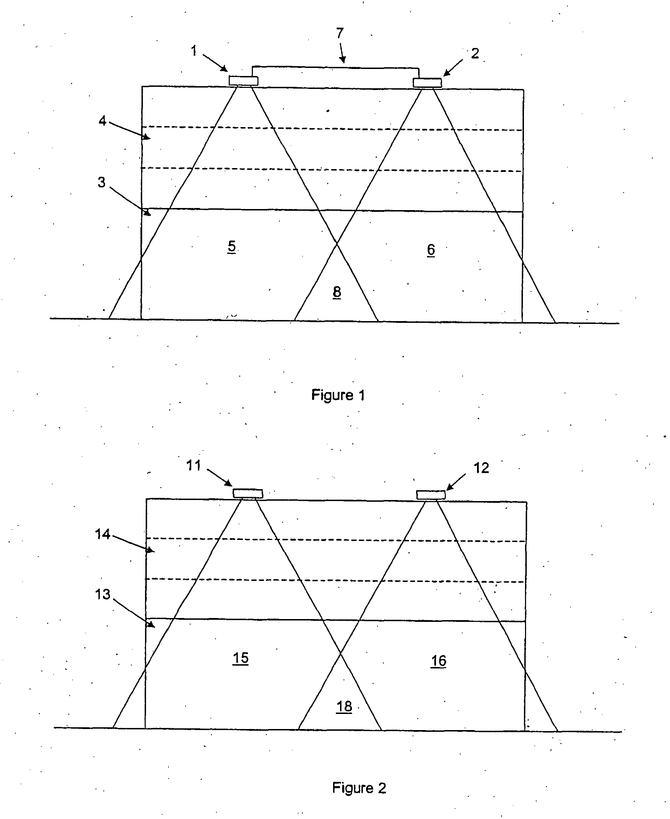

Die Figuren 1 bis 3 zeigen in jeweils einer schematischen Ansicht verschiedene Ausführungsformen von Sensoranordnungen an einem Rolltor.

### Beschreibung der Ausführungsbeispiele

In Figur 1 sind zwei Sensorvorrichtungen 1, 2 dargestellt. Diese Sensorvorrichtungen 1, 2 überwachen ein Rolltor 4 zum Verschließen und Öffnen einer Öffnung 3. Die Sensoren 1, 2 haben Überwachungsbereiche 5, 6. In einem mittleren Bereich 8 überlappen sich die Überwachungsbereiche 5, 6. Aufgrund des Überlappungsbereichs 8 kann es zu fehlerhaften Messungen kommen, die eine zuverlässige Funktion der Sensorvorrichtungen 1, 2 unmöglich macht.

Die Sensorvorrichtungen 1, 2 sind über eine Verbindung 7 elektrisch miteinander verbunden. Intern verbindet die Verbindung einen Eingang bzw. einen Ausgang jedes Sensors (nicht dargestellt). Wenn die Sensorvorrichtung 1 eine Messung durchführen möchte findet eine Überprüfung statt, ob am Eingang 1 der Sensorvorrichtung 1 ein Signal vom Ausgang der Sensorvorrichtung 2 anliegt, das einen aktuellen Messvorgang der Sensorvorrichtung 2 anzeigt. Wenn dies der Fall ist, ist die Sensorvorrichtung 1 vorzugsweise so ausgelegt, dass sie für eine vorgegebene, gegebenenfalls zufällige Zeitspanne in eine Warteposition geht und dann erneut einen Messvorgang startet, sofern durch den Eingang signalisiert wird, dass die Sensorvorrichtung 2 gerade keine Messung vornimmt. Bis eine weitere Messung durchgeführt wird, dass heißt bis zur nächsten Beleuchtungsphase liegt auf der Verbindung 7 von der jeweiligen Sensorvorrichtung vorzugsweise kein Signal an. Dies kann sich daraus ergeben, dass die jeweilige Sensorvorrichtung mit der Auswertung von gemessenen Daten befasst ist oder ganz einfach sich in einer Warteperiode befindet. Wenn beide Sensorvorrichtungen auf genau gleiche Weise arbeiten, wird es niemals zu einer gleichzeitigen Messung kommen, da jede Sensorvorrichtung keine Messung startet, solange die andere Sensorvorrichtung aktiv ist.

In Figur 2 ist ein weiteres Ausführungsbeispiel der Erfindung dargestellt. Über einer Öffnung 13, die mit einem Rolltor 14 verschließbar ist, sind Sensorvorrichtungen 11, 12 im Sturzbereich der Öffnung angeordnet. Die Sensorvorrichtungen 11, 12 weisen einen jeweiligen Detektionsbereich 15, 16 auf, welche sich aber in einem Bereich 18 überlappen. Zwischen den Sensorvorrichtungen 11, 12 gibt es keine elektrische Verbindung. Bevor eine Sensorvorrichtung 11 oder 12 eine eigentlich Distanzmessung startet, führt sie zunächst eine Messung aus, ohne selbst Licht zu emittieren. Sofern kein Signal messbar ist, wird die Messung mit der eigentlichen Distanzmessung fortgesetzt. Andernfalls wartet die Sensorvorrichtung für eine vorgegebene oder zufällige Zeitspanne und startet dann erneut die Messung ohne Beleuchtung, auf die dann die eigentliche Distanzmessung folgt, sofern kein störendes Signal ermittelbar ist.

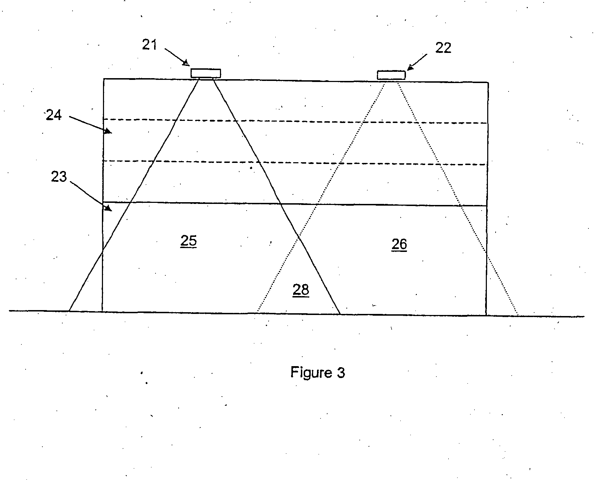

,In Figur 3 sind zwei Sensorvorrichtungen 21, 22 dargestellt. Diese Sensorvorrichtungen 21, 22 überwachen ein Rolltor 24 zum Verschließen und Öffnen einer Öffnung 23. Die Sensoren 21, 22 haben Überwachungsbereiche 25, 26. In einem mittleren Bereich 28 überlappen sich die Überwachungsbereiche 25, 26. Um eine zuverlässige Detektion zu erhalten, benutzen die Sensorvorrichtungen 21, 22 unterschiedliche Modulationsfrequenzen.

Während eines Startvorgangs warten die Sensorvorrichtungen 21, 22 eine zufällige Zeitspanne ab. Eine der Sensorvorrichtungen, z.B. die Sensorvorrichtung 21 hat eine kürzere Wartezeit. Daher führt die Sensorvorrichtung 21 eine erste Testmessung durch, bei welcher auf einer ursprünglichen Modulationsfrequenz eine Messung durchgeführt wird, jedoch ohne den Detektionsbereich 25 zu beleuchten. Sofern bei dieser Messung kein anderes Signal detektiert wird, führt die Sensorvorrichtung 21 in dieser Frequenz eine Distanzmessung durch. Nach einer Wartezeit beginnt der Sensor 22 ebenfalls mit einer Testmessung, wobei eine Messung auf der gleichen Startfrequenz, jedoch ohne Beleuchtung des Überwachungsbereichs 26 durchgeführt wird. Sofern zu diesem Zeitpunkt die Sensorvorrichtung 21 noch arbeitet, wird die zweite Sensorvorrichtung 22 aufgrund des Überlappungsbereichs 28 ein Signal der entsprechenden Modulationsfrequenz detektieren und daraufhin die Modulationsfrequenz ändern. Dann schließt sich eine neue Testmessung an, aus der sich ergibt, dass mit der neuen Frequenz die eigentliche Distanzmessung durchgeführt werden kann. Im Fall einer Mehrzahl von Sensoren kann diese Vorgehensweise solange wiederholt werden, bis eine freie Frequenz gefunden ist.

Die Figur 3 kann auch dahingehend interpretiert werden; dass zwei Sensorvorrichtungen 21, 22 mit verschiedenen Trägerfrequenzen vorliegen. Das Licht, das durch eine Sensorvorrichtung, zum Beispiel die Sensorvorrichtung 21 emittiert wird, besitzt beispielsweise eine Wellenlänge von ungefähr 850 nm. Das emittierte Licht kann amplitudenmoduliert oder gepulst sein. Ein Empfangsteil der Sensorvorrichtung 21 (nicht dargestellt) ist lediglich sensitiv für einen Wellenlängenbereich von 820 nm bis 880 nm. Die zweite Sensorvorrichtung 22 emittiert Licht mit einer Wellenlänge von rund 920 nm, wobei ihr Empfänger nur für Licht sensitiv ist in einem Frequenzbereich von 900 nm bis 950 nm. Es ist evident, dass sich dadurch die Sensorvorrichtung 21 und 22 nicht stören werden.

Die Figuren zeigen lediglich zwei Sensoren wenngleich die Erfindung auch für mehr als zwei Sensoren in entsprechender Weise "funktioniert".

## Patentansprüche

1. Tür-/Torüberwachungsvorrichtung mit einer Sensorvorrichtung, bestehend aus einer Quelle für elektromagnetische Strahlung, insbesondere Licht, einem Empfänger für die elektromagnetische Strahlung und einer Steuereinrichtung, wobei die Steuereinrichtung dazu ausgelegt ist, mittels der Quelle elektromagnetische Strahlung auszusenden und die von der Quelle ausgesandte, von einer Reflexionsfläche eines Objekts an den Empfänger reflektierte, elektromagnetische Strahlung auszuwerten, wobei die Steuervorrichtung weiter so ausgebildet ist, dass bei der von der Quelle ausgestrahlten elektromagnetischen Strahlung unterschiedliche Frequenzen eingestellt werden können,
**dadurch gekennzeichnet, dass** die Steuervorrichtung weiter so ausgebildet ist, mittels der von der Quelle ausgesandten elektromagnetischen Strahlung eine Distanz zu ermitteln, die die elektromagnetische Strahlung von der Reflexionsfläche des Objekts an den Empfänger zurücklegt, wobei die Steuervorrichtung weiterhin so ausgelegt ist, dass sie vor Aussendung eines Signals prüft, ob auf der für die Quelle eingestellten Frequenz von einer gegebenenfalls vorhandenen anderen Quelle für elektromagnetische Strahlung bereits Signale empfangen werden, und, sofern dies der Fall ist, die Frequenz für die Quelle ändert.

2. Vorrichtung nach Anspruch 1, **dadurch gekennzeichnet, dass** zwei Lichtquellen vorgesehen sind, wobei eine Lichtquelle die elektromagnetische Strahlung nach Anspruch 1 ist, die mit verschiedenen Frequenzen arbeiten.

3. Vorrichtung nach einem der vorhergehenden Ansprüche, **dadurch gekennzeichnet, dass** eine Frequenzänderung im Hinblick auf eine Modulationsfrequenz durchführbar ist.

4. Vorrichtung nach einem der vorhergehenden Ansprüche, **dadurch gekennzeichnet, dass** eine Frequenzänderung im Hinblick auf eine Trägerfrequenz realisierbar ist.

5. Vorrichtung nach einem der vorhergehenden Ansprüche, **dadurch gekennzeichnet, dass** die Frequenz wenigstens während einer Distanzmessung variierbar ist.

6. Vorrichtung nach einem der vorhergehenden Ansprüche, **dadurch gekennzeichnet, dass** die Frequenz wenigstens während eines Zeitabschnitts einer Distanzmessung konstant bleibt.

7. Vorrichtung nach einem der vorhergehenden Ansprüche, **dadurch gekennzeichnet, dass** eine erste Frequenz auf der eine Prüfung auf Vorhandensein von Signalen durchgeführt werden soll, willkürlich wählbar ist.

8. Vorrichtung nach einem der vorhergehenden Ansprüche, **dadurch gekennzeichnet, dass** eine Frequenzänderung willkürlich wählbar ist.

9. Vorrichtung nach einem der vorhergehenden Ansprüche, **dadurch gekennzeichnet, dass** manuelle Einstellmittel zur Vorgabe einer Frequenz vorgesehen sind.

10. Vorrichtung nach einem der vorhergehenden Ansprüche, **dadurch gekennzeichnet, dass** eine Frequenz nach vorgegebener Zeit automatisch änderbar ist.

11. Vorrichtung nach einem der vorhergehenden Ansprüche, **dadurch gekennzeichnet, dass** eine Veränderung der Frequenz abhängig davon vornehmbar ist, inwieweit bei einer Prüfung auf Vorhandensein vor Signalen auf einer bestimmten Frequenz Störungen für von durch die Quelle für elektromagnetische Strahlung abgegebenen Signalen wahrgenommen werden.

12. Vorrichtung nach einem der vorhergehenden Ansprüche, **dadurch gekennzeichnet, dass** ein Empfänger an die Frequenz der als Licht ausgestrahlten elektromagnetischen Strahlung anpassbar ist.

13. Vorrichtung nach einem der vorhergehenden Ansprüche, **dadurch gekennzeichnet, dass** eine erste Distanzmessung vornehmbar ist mit Frequenzen in einem ersten Frequenzbereich und eine zweite mit Frequenzen in einem zweiten Frequenzbereich, wobei der erste Frequenzbereich so gewählt ist, dass eine genaue, aber nicht eindeutige Distanzmessung vorliegt, wobei mit der zweiten Distanzmessung die Eindeutigkeit der ersten Distanzmessung einstellbar ist.

14. Vorrichtung nach Anspruch 13, **dadurch gekennzeichnet, dass** die Distanzmessungen in einem Frequenzbereich erfolgen, in dem die Messgenauigkeit am größten ist.

15. Vorrichtung nach einem der vorhergehenden Ansprüche, **dadurch gekennzeichnet, dass** die Frequenz in Abhängigkeit von der gemessenen Distanz geregelt wird.

## Claims

1. Door/gate monitoring device having a sensor device comprising a source of electromagnetic radiation, in particular light, a receiver for the electromagnetic radiation and a control device, the control device being designed to use the source to emit electromagnetic radiation and being designed to evaluate the electromagnetic radiation emitted from the source and reflected by a reflective surface of an object to the receiver, the control device also being designed so that at the electromagnetic radiation emitted by the source different frequencies can be adjusted, **characterised in that** the control device is also designed to determine a distance by means of the electromagnetic radiation emitted by the source that the electromagnetic radiation covers from the reflective surface of the object to the receiver, the control device also being designed so that prior to sending a signal it checks whether signals are already being received at the frequency set for the source from a possibly provided other source of electromagnetic radiation and, if this is the case, changes the frequency of the source.

2. Device according to claim 1, **characterised in that** two light sources are provided, which operate at different frequencies, one light source being the electromagnetic radiation according to claim 1.

3. Device according to one of the preceding claims, **characterised in that** the frequency can be changed with regard to a modulation frequency.

4. Device according to one of the preceding claims, **characterised in that** the frequency can be changed with regard to a carrier frequency.

5. Device according to one of the preceding claims, **characterised in that** the frequency can be varied at least during a distance measurement.

6. Device according to one of the preceding claims, **characterised in that** the frequency remains constant at least during a time period of a distance measurement.

7. Device according to one of the preceding claims, **characterised in that** a first frequency at which a check for the presence of signals is to be performed can be selected at random.

8. Device according to one of the preceding claims, **characterised in that** a change in frequency can be selected at random.

9. Device according to one of the preceding claims, **characterised in that** manual adjusting means are provided for the purpose of predefining a frequency.

10. Device according to one of the preceding claims, **characterised in that** a frequency can be automatically changed after a predefined amount of time.

11. Device according to one of the preceding claims, **characterised in that** the frequency can be changed on the basis of the extent to which interference is detected of signals emitted by the source for electromagnetic radiation during a check for the presence of signals at a specific frequency.

12. Device according to one of the preceding claims, **characterised in that** a receiver can be adjusted to the frequency of the electromagnetic radiation emitted as light.

13. Device according to one of the preceding claims, **characterised in that** a first distance measurement can be carried out at frequencies in a first frequency range and a second distance measurement can be carried out at frequencies in a second frequency range, the first frequency range being selected such that an accurate but not unambiguous distance measurement is provided, the second distance measurement being used to adjust the unambiguousness of the first distance measurement.

14. Device according to claim 13, **characterised in that** the distance measurements are carried out in a frequency range in which the precision of the measurement is the greatest.

15. Device according to one of the preceding claims, **characterised in that** the frequency is controlled on the basis of the measured distance.

## Revendications

1. Dispositif de surveillance d'une porte ou d'un portail avec un dispositif de capteurs, comprenant une source de rayonnement électromagnétique, notamment de la lumière, un récepteur du rayonnement électromagnétique et un dispositif de commande, le dispositif de commande étant conçu pour envoyer un rayonnement électromagnétique à l'aide de la source et pour exploiter le rayonnement électromagnétique émis par la source et réfléchi vers le récepteur par une surface de réflexion d'un objet, le dispositif de commande étant en outre conçu pour que des fréquences différentes puissent être réglées pour le rayonnement électromagnétique émis par la source, **caractérisé en ce que** le dispositif de commande est en outre conçu pour déterminer une distance parcourue par le rayonnement électromagnétique entre la surface de réflexion de l'objet et le récepteur à l'aide du rayonnement électromagnétique émis par la source, le dispositif de commande étant en outre conçu pour contrôler avant l'envoi d'un signal sur la fréquence réglée pour la source si des signaux ont déjà été reçus provenant d'une autre source de rayonnement électromagnétique éventuellement présente, et dans l'affirmative pour changer la fréquence de la source.

2. Dispositif selon la revendication 1, **caractérisé en ce que** deux sources de lumière sont prévues, une source de lumière constituant le rayonnement électromagnétique travaillant à différente fréquence selon la revendication 1.

3. Dispositif selon l'une des revendications précédentes, **caractérisé en ce qu**'un changement de fréquence peut être réalisé en vue d'une modulation de fréquence.

4. Dispositif selon l'une des revendications précédentes, **caractérisé en ce qu'un** changement de fréquence peut être réalisé en vue d'une fréquence porteuse.

5. Dispositif selon l'une des revendications précédentes, **caractérisé en ce que** la fréquence peut varier au moins pendant une mesure de distance.

6. Dispositif selon l'une des revendications précédentes, **caractérisé en ce que** la fréquence reste constante au moins pendant le laps de temps d'une mesure de distance.

7. Dispositif selon l'une des revendications précédentes, **caractérisé en ce qu'**une première fréquence sur laquelle doit être réalisé un contrôle de la présence de signaux peut être choisie arbitrairement.

8. Dispositif selon l'une des revendications précédentes, **caractérisé en ce qu'un** changement de fréquence peut être choisi arbitrairement.

9. Dispositif selon l'une des revendications précédentes, **caractérisé en ce que** des moyens de réglage manuels sont prévus pour imposer une fréquence.

10. Dispositif selon l'une des revendications précédentes, **caractérisé en ce qu**'une fréquence peut être changée automatiquement après un laps de temps donné.

11. Dispositif selon l'une des revendications précédentes, **caractérisé en ce qu'**un changement de la fréquence peut être effectué selon si lors d'un contrôle de la présence de signaux sur une certaine fréquence des perturbations des signaux émis par la source de rayonnement électromagnétique sont ressenties.

12. Dispositif selon l'une des revendications précédentes, **caractérisé en ce qu**'un récepteur peut être ajusté à la fréquence du rayonnement électromagnétique émis comme lumière.

13. Dispositif selon l'une des revendications précédentes, **caractérisé en ce qu**'une première mesure de distance est réalisée à des fréquences situées dans une première plage de fréquences et une deuxième mesure est réalisée à des fréquences situées dans une deuxième plage de fréquences, la première plage de fréquence étant choisie de telle sorte qu'une mesure de distance précise, mais non univoque, soit disponible, l'univocité de la première mesure de distance pouvant être obtenue avec la deuxième mesure de distance.

14. Dispositif selon la revendication 13, **caractérisé en ce que** les mesures de distances sont réalisées dans une plage de fréquence dans laquelle la précision de la mesure est la plus élevée.

15. Dispositif selon l'une des revendications précédentes, **caractérisé en ce que** la fréquence est réglée en fonction de la distance mesurée.
